# EUROPÄISCHE PATENTSCHRIFT

(11) **EP 3 967 890 B1**
(45) Veröffentlichungstag und Bekanntmachung des Hinweises auf die Patenterteilung: **10.01.2024**
(21) Anmeldenummer: 21194698.3
(22) Anmeldetag: 03.09.2021
(51) Int. Cl.: F16B 12/26, F16B 12/38, A47B 47/00, A47B 96/06, A47B 95/04, F16B 12/44

(54) **VERBINDUNGSELEMENT FÜR EIN MÖBELSTÜCK, STECKSYSTEM MIT EINEM SOLCHEN VERBINDUNGSELEMENT UND EIN VERFAHREN ZUR MONTAGE EINES MÖBELSTÜCKS**
CONNECTING ELEMENT FOR A PIECE OF FURNITURE, PLUG-IN SYSTEM COMPRISING SUCH A CONNECTING ELEMENT AND A METHOD OF ASSEMBLING A PIECE OF FURNITURE
ELEMENT DE CONNEXION POUR UN MEUBLE, SYSTEME ENFICHABLE COMPRENANT UN TEL ELEMENT DE CONNEXION ET PROCEDE DE MONTAGE D'UN MEUBLE

(30) Priorität: 14.09.2020 DE 102020123839
(43) Veröffentlichungstag der Anmeldung: 16.03.2022
(73) Patentinhaber: Topstar GmbH, 86863 Langenneufnach (DE)
(72) Erfinder: Diez, Stefan, 80469 München (DE)
(74) Vertreter: Müller Schupfner & Partner Patent- und Rechtsanwaltspartnerschaft mbB

(56) Entgegenhaltungen:
- AT-B- 295 078
- US-A- 4 126 978
- US-A- 5 806 253

## Beschreibung

Die vorliegende Erfindung betrifft ein Verbindungselement für ein Möbelstück, ein Stecksystem mit einem solchen Verbindungselement und ein Verfahren zur Montage eines Möbelstücks.

Insbesondere betrifft die vorliegende Erfindung ein Verbindungselement für ein Möbelstück, mit dem Möbelkomponenten ohne zusätzliches Befestigungsmittel, wie Schrauben oder Bolzen, oder Stoffschlussmittel, wie Leim oder Klebstoff, miteinander verbunden werden können. Dabei dient ein solches Verbindungselement primär dazu, eine erste Möbelkomponente und eine zweite Möbelkomponente miteinander zu fügen bzw. zu verbinden. Beispielsweise handelt es sich bei dem Möbelstück um ein Regal, das aus Seitenwänden und Regalbrettern bzw. -böden unter Verwendung des Verbindungselements zusammengebaut wird.

Aus der Druckschrift WO 2014 146 979 sind solche Verbindungselemente bekannt, bei denen über Schnappverbindungen jeweils eine Verbindung vom Verbindungselement zu einer ersten Möbelkomponente und einer zweiten Möbelkomponente hergestellt wird, um so die erste Möbelkomponente mit der zweiten Möbelkomponente über das Verbindungselement zu verbinden. Dabei ist das Verbindungselement im Inneren der ersten Möbelkomponente und der zweiten Möbelkomponente angeordnet und wirkt dabei mit massiven Kernbereichen der ersten Möbelkomponente und der zweiten Möbelkomponente zusammen.

AT 295 078 B zeigt eine Verbindungseinrichtung für Platten. Zwei Vertikalplatte sind dabei in jeweils einer Nut aufgenommen. Die Seitenwände der Nut sind sägezahnartig profiliert. Ferner weist die Verbindungseinrichtung eine Längsnut auf, in die ein Halter eingeschoben werden kann.

US 4 126 978 A zeigt eine Vorrichtung zum Verbinden von Paneelen. Die Vorrichtung umfasst zwei Panelrandelemente. Die Paneele sind dabei mittels Nägel mit dem Panelrandelement verbunden. Die Panelrandelemente sind mittels eines Kernelements schnappartig miteinander verbunden. Ferner kann an dem Kernelement eine Abdeckplatte befestigt werden.

US 5 806 253 A zeigt ein Treppenkantenelement mit einer Treppennase und einem festen Basiselement. Die Treppennase bildet zusammen mit dem starren Basiselement zwei Aufnahmeräume, in die Bodenplatten eingesetzt werden können. Dabei ist das Treppennasenelement in eine Vertiefung in dem starren Basiselement eingesetzt.

Ausgehend vom Stand der Technik macht es sich die vorliegende Erfindung zur Aufgabe, ein Verbindungselement für das Verbinden der ersten Möbelkomponente und der zweiten Möbelkomponente bereitzustellen, das möglichst einfach und vielseitig einsetzbar ist, insbesondere auch den Einsatz bei Möbelkomponenten erlaubt, die als Leichtbauteile ausgebildet sind, d. h. frei sind von einem massiven Materialbereich in der Möbelkomponente. Außerdem soll das Verkleidungselement im verbauten Zustand visuell kaum oder gar nicht wahrzunehmen sein.

Die vorliegende Erfindung löst die Aufgabe mit einem Verbindungselement für Möbelstücke gemäß Anspruch 1, mit einem Stecksystem gemäß Anspruch 8 und einem Verfahren gemäß Anspruch 10. Weitere Ausführungsformen sind den abhängigen Ansprüchen und der Beschreibung zu entnehmen.

Gemäß einem ersten Aspekt der vorliegenden Erfindung ist ein Verbindungselement für ein Möbelstück zum Verbinden einer ersten Möbelkomponente, beispielsweise einer Seitenwand, mit einer schräg zur ersten Möbelkomponente verlaufenden zweiten Möbelkomponente, beispielweise einem Regalbodenträger und/oder einem Regalboden, ohne zusätzliches Stoffschlussmittel und ohne zusätzliches Befestigungsmittel, vorgesehen, umfassend:
- einen ersten Funktionsabschnitt für eine erste Schnappvorrichtung, die im montierten Zustand einen ersten Formschlusses des Verbindungselements mit der ersten Möbelkomponente ausbildet,
- einen zweiten Funktionsabschnitt für eine zweite Schnappvorrichtung, die im montierten Zustand einen zweiten Formschluss des Verbindungselements mit der zweiten Möbelkomponente ausbildet,
- einen Aufnahmebereich, in dem im montierten Zustand ein Abschnitt der zweiten Möbelkomponente aufgenommen ist, und
- einen dritten Funktionsabschnitt für eine dritte Schnappvorrichtung, die im montierten Zustand einen dritten Formschluss des Verbindungselements mit einem Verkleidungselement ausbildet, das den Aufnahmebereich zumindest teilweise, vorzugsweise vollständig, auf einer Sichtseite des Möbelstücks, ab- bzw. bedeckt, und/oder einen vierten Funktionsabschnitt für eine vierte Schnappvorrichtung, die im montierten Zustand eine Rückwand des Möbelstücks fixiert.

Gegenüber den aus dem Stand der Technik bekannten Verbindungselementen ist zusätzlich zu dem ersten Funktionsabschnitt und dem zweiten Funktionsabschnitt, die dem Verbinden der ersten Möbelkomponente mit der zweiten Möbelkomponente dienen, ein dritter Funktionsabschnitt und/oder ein vierter Funktionsabschnitt vorgesehen, mit dem ein Verkleidungselement bzw. eine Rückwand an das Verbindungselement angebunden werden kann. Damit kommt dem erfindungsgemäßen Verbindungselement eine zusätzliche Aufgabe zu, zusätzlich zu dem Verbinden der ersten Möbelkomponente mit der zweiten Möbelkomponente, wodurch in vorteilhafter Weise die Funktionalität des Verbindungselements in vorteilhafter Weise gegenüber den aus dem Stand der Technik bekannten Verbindungselementen erhöht wird.

Besonderes bevorzugt ist es vorgesehen, wenn die erste Möbelkomponente und die zweite Möbelkomponente im Wesentlichen senkrecht zueinander ausgerichtet sind, wie es beispielsweise bei einem Regalboden und einer tragenden Seitenwand eines Regals der Fall ist. Insbesondere ist es vorgesehen, dass das Verbindungselement derart ausgestaltet ist, beispielsweise durch eine entsprechenden Ausrichtung des ersten Funktionsabschnitts, des zweiten Funktionsabschnitts, des dritten Funktionsabschnitts und/oder des vierten Funktionsabschnitts, dass die erste Möbelkomponente und die zweite Möbelkomponente senkrecht zueinander verlaufen und das Verkleidungselement verläuft parallel zum Verlauf der ersten und/oder zweiten Möbelkomponente. Die zweite Möbelkomponente wird dabei entlang einer Steckrichtung in den Aufnahmebereich eingeschoben. Ferner ist es bevorzugt vorgesehen, dass der Formschluss der ersten Schnappvorrichtung, der Formschluss der zweiten Schnappvorrichtung, der Formschluss der dritten Schnappvorrichtung bzw. der Formschluss der vierten Schnappvorrichtung in Richtungen wirken, die parallel zueinander, besonders bevorzugt parallel zur Steckrichtung, verlaufen. Beispielsweise handelt es sich bei dem Verkleidungselement um einer Zierleiste.

Insbesondere ist es vorgesehen, dass der Aufnahmebereich im montierten Zustand des Verbindungselements gegenüber dem dritten Funktionsabschnitt in einer parallel zur Steckrichtung verlaufenden Richtung gesehen gegenüber der Sichtseite des Möbelstücks zurückversetzt ist. Dadurch kann das am dritten Funktionsabschnitt befestigt Verkleidungselement das Verbindungselement und den Aufnahmebereich abdecken, indem es sich an der Sichtseite des Möbelstücks über das Verbindungselement und den Aufnahmebereich hinwegerstreckt. Der Aufnahmebereich umgibt den aufgenommen Abschnitt der zweiten Möbelkomponente vorzugsweise an drei verschiedenen Seiten.

Daher erweist es sich als vorteilhaft über den dritten Funktionsabschnitt das Verkleidungselement an das Verbindungselement anzubringen, weil dadurch das Verbindungselement und insbesondere der Aufnahmebereich des Verbindungselements abgedeckt werden. Infolgedessen ist es in vorteilhafter Weise möglich, mit dem Verbindungselement, insbesondere dessen dritten Funktionsabschnitt, der das Verkleidungselement an das Verbindungselement in festgelegter Richtung bzw. Orientierung fixiert, den Bereich abzudecken, in dem die zweite Möbelkomponente aufgenommen wird, sowie entsprechende Teilbereiche des Verbindungselements, die andernfalls an der Sichtseite des Möbelstücks zu erkennen wären.

Insbesondere ist es vorgesehen, dass das Verbindungselement dazu ausgelegt ist, entlang der Steckrichtung in eine entsprechende Ausnehmung an einer Seite der ersten Möbelkomponente eingeschoben zu werden bis über die erste Schnappverbindung eine formschlüssige Verbindung zwischen dem Verbindungselement und der ersten Möbelkomponente erreicht wird. Das eingesetzte Verbindungselement weist dann einen zur Sichtseite hin offenen Aufnahmebereich auf, über den der Abschnitt der zweiten Möbelkomponente eingeschoben werden kann, insbesondere bis der zweite Funktionsabschnitt mit einem entsprechenden Profil der zweiten Möbelkomponente nach dessen Einrasten formschlüssig zusammenwirkt. Insbesondere ist der Aufnahmebereich maulartig bzw. topfförmig ausgestaltet. Hierzu hat der Aufnahmebereich in dem Bereich, der im montierten Zustand in die erste Möbelkomponente eingreift bzw. im der ersten Möbelkomponente versenkt ist, eine U-förmig Grundform.

Weiterhin ist es besonders bevorzugt vorgesehen, dass das Verkleidungselement U-förmig ist und einen der Sichtseite des Möbelstücks zugewandten Endabschnitt der ersten Möbelkomponente im montierten Zustand umgreift. Dieser Endabschnitt, der der Sichtseite des Möbelstücks zugewandt ist, steht dabei gegenüber einer Frontseite der im Aufnahmebereich aufgenommenen zweiten Möbelkomponente zur Sichtseite hin vor. Durch das Aufsetzen bzw. Aufschieben des Verkleidungselements auf den Endabschnitt wird somit der Endabschnitt vom Verkleidungselement umgriffen und das Verbindungselement schlägt an die außenliegende bzw. der Sichtseite zugewandten Frontseite der zweiten Möbelkomponente an. Insbesondere liegt das offene Ende des U-förmigen Verkleidungselements an der zweiten Möbelkomponente an. Durch das Einfügen der zweiten Möbelkomponente in den Aufnahmebereich und das anschließende Anbringen des Verkleidungselements wird zur Sichtseite hin das Verbindungselement vorzugsweise durch das Verkleidungselement und die zweite Möbelkomponente bedeckt. Zur Fixierung des Verkleidungselements ist es insbesondere vorgesehen, dass das Verbindungselement einen dritten Funktionsabschnitt aufweist, über den eine Schnappverbindung zu der Innenseite des Verkleidungselements hergestellt wird. In entsprechender Weise weist das Verkleidungselement mit seinem U-förmigen Verlauf an seiner Innenseite einen geschwungenen bzw. eingekerbten Verlauf auf, der im montierten Zustand formschlüssig mit dem dritten Funktionsabschnitt des Verbindungselements zusammenwirkt.

Insbesondere ist unter einer Schnappvorrichtung bzw. einem entsprechenden Funktionsabschnitt zu verstehen, dass der jeweilige Abschnitt am Verbindungselement elastisch deformierbar ist und insbesondere derart profiliert ist, dass er mit einem entsprechenden komplementär ausgeformten Konturverlauf formschlüssig zusammenwirken kann, insbesondere nach einer Einrastbewegung während der Montage. Vorzugsweise ist es vorgesehen, dass der erste Funktionsabschnitt zur Ausbildung der ersten Schnappvorrichtung derart am Verbindungselement angeordnet ist, dass sich die erste Schnappvorrichtung im Endabschnitt der ersten Möbelkomponente ausbildet, wodurch der erste Funktionsabschnitt durch das Verkleidungselement im montierten Zustand bedeckt bzw. abgedeckt werden kann. Weiterhin ist es vorzugsweise vorgesehen, dass der Endabschnitt der ersten Möbelkomponente zur Sichtseite bzw. Frontseite hin verjüngt, insbesondere in Hinblick auf seine Breite. Vorzugsweise gehen die Seitenwände des Verkleidungselements im montierten Zustand, in dem das Verkleidungselement den Endabschnitt umgreift, bündig in die Deckwände des ersten Möbelbauteils über. Dies wird insbesondere durch einen entsprechend verjüngenden oder verjüngten Verlauf des Endabschnitts des ersten Möbelstücks begünstigt bzw. verursacht. Insbesondere ist es vorgesehen, dass die Schnappvorrichtungen lösbar mit der ersten Möbelkomponente, der zweiten Möbelkomponente, der Rückwand und/oder dem Verkleidungselement verbindbar ist, um das Möbelstück möglichst zerstörungsfrei und einfach wieder zu demontieren.

Weiterhin ist es besonders bevorzugt vorgesehen, dass die erste Möbelkomponente und/oder die Rückwand als Leichtbauteil ausgebildet ist, bei dem zwei einander gegenüberliegende und parallel zueinander verlaufende Deckwände durch entsprechende Querverstrebungen voneinander beabstandet sind. Vorzugsweise bilden die Querverstrebungen ein wabenförmiges, rautenförmiges, rechteckiges und/oder quadratisches Muster. Zwischen den einzelnen Querverstrebungen bilden sich Hohlräume aus, wodurch ein vergleichsweise leichtes Bauteil bereitgestellt wird, insbesondere im Vergleich zu solchen Bauteilen, die massiv ausgebildet sind. Vorzugsweise ist es dabei vorgesehen, dass zur Ausbildung der ersten Schnappvorrichtung entsprechende Ausnehmungen und/oder rückspringende Deckwandkonturverläufe am äußersten Rand der Deckwände vorgesehen sind, wodurch zum einen eine Aufnahme des Verbindungselements in der ersten Möbelkomponente zugelassen wird und zum anderen eine Schnappverbindung zwischen dem ersten Funktionsabschnitt und dem entsprechenden Verlauf der Deckwände realisiert wird, um den Formschluss zwischen erster Möbelkomponente und Verbindungselement zu realisieren. Vorzugsweise ist der erste Funktionsabschnitt als Außenkontur bzw. Vorsprung am Verbindungselement ausgebildet. Vorzugsweise ist der zweite Funktionsabschnitt im Aufnahmebereich angeordnet, insbesondere am Boden des U-förmigen Grundverlaufs des Aufnahmebereichs bzw. an einem der Öffnung gegenüberliegenden Boden des U-förmigen Grundverlaufs des Aufnahmebereichs. Dadurch ist es in vorteilhafter Weise möglich, die zweite Möbelkomponente bzw. den Abschnitt der zweiten Möbelkomponente in den Aufnahmebereich aufzunehmen und insbesondere solange entlang einer Steckrichtung zu verschieben, bis eine formschlüssige Verbindung zwischen der zweiten Möbelkomponente und dem zweiten Funktionsabschnitt hergestellt ist. Beispielsweise lässt sich die zweite Möbelkomponente an der Innenseite des Aufnahmebereichs führen, bis die zweite Möbelkomponente mit dem zweiten Funktionsabschnitt verrastet.

Vorzugsweise wird die zweite Möbelkomponente im montierten Zustand durch das Verbindungselement gelagert, beispielsweise indem die zweite Möbelkomponente an einer Innenseite des Aufnahmebereichs aufliegt. Dabei ist es vorzugsweise vorgesehen, dass der Aufnahmebereich eine in Steckrichtung bemessene Tiefe aufweist, die größer als eine Tiefe des Abschnitts der zweiten Möbelkomponente ist, der in den Aufnahmebereich während der Montage einzuschieben ist. Insbesondere ist er in etwa doppelt so groß bzw. so tief wie der aufgenommene Abschnitt der zweiten Möbelkomponente. Dadurch ist es in vorteilhafter Weise möglich, dass ein Endabschnitt der ersten Möbelkomponente bzw. ein Abschnitt des Verbindungselements im montierten Zustand gegenüber einer Frontseite bzw. Seitenwand der zweiten Möbelkomponente vorsteht, um so mit dem vorstehenden Endabschnitts der ersten Möbelkomponente eine Verbindung zum Verkleidungselement herzustellen, mit dem wiederrum das Verkleidungselement und der Endabschnitt abgedeckt werden können. Dadurch lässt sich mit dem Stecksystem eine optisch ansprechende Sichtseite des Möbelstücks realisieren, bei der das Verbindungselement nicht als Störstelle visuell wahrgenommen wird. Vorzugsweise ist es vorgesehen, dass das Verbindungselement im Wesentlichen T-förmig ist. Dadurch ist es in vorteilhafter Weise möglich, den den dritten und/oder vierten Funktionsabschnitt an Seiten des erbindungselements zu platzieren, die der Sichtseite zugewandt sind, während der erste Funktionsabschnitt und der zweite Funktionsabschnitt gegenüber dem dritten und vierten Funktionsabschnitt im montierten Zustand ins Innere der ersten Möbelkomponente zurückversetzt sind.

Vorzugsweise sind in Steckrichtung gesehen der dritte Funktionsabschnitt und der vierte Funktionsabschnitt auf derselben Höhe angeordnet. Insbesondere ist es vorgesehen, dass der dritte Funktionsabschnitt und/oder vierten Funktionsabschnitt an Seiten des Verbindungselements zu platzieren, die der Sichtseite zugewandt sind, während der erste Funktionsabschnitt und der zweite Funktionsabschnitt gegenüber dem dritten und vierten Funktionsabschnitt im montierten Zustand ins Innere der ersten Möbelkomponente zurückversetzt sind. Vorzugsweise sind in Steckrichtung gesehen der dritte Funktionsabschnitt und der vierte Funktionsabschnitt auf derselben Höhe angeordnet. Insbesondere ist es vorgesehen, dass der dritte Funktionsabschnitt und/oder vierte Funktionsabschnitt beidseitig, d. h. aneinander gegenüberliegenden Seiten des Aufnahmebereichs (betrachtet in eine Richtung die parallel zur Hauptebene, die durch den T-förmigen Verlauf des Verbindungselements aufgespannt wird, und senkrecht zur Steckrichtung verläuft), insbesondere angrenzend an beiden Seiten des U-förmigen Abschnitts des Aufnahmebereichs, angeordnet sind, um eine möglichst symmetrische Kraftwirkung auf das Verkleidungselement bzw. die Rückwand zu realisieren.

Weiterhin ist es bevorzugt vorgesehen, dass der vierte Funktionsabschnitt derart gestaltet ist, dass er im verbauten Zustand in Hohlräume der Rückwand eingreift, insbesondere in Hohlräume, die von einer als Leichtbauteil bereitgestellten Rückwand bereitgestellt sind.

Ferner ist es vorgesehen, dass das Verbindungselement integral ausgebildet ist, insbesondere aus einem Kunststoff und/oder einem Stahlblech gefertigt ist. Unter integral bzw. einstückig ist insbesondere zu verstehen, dass das Verbindungselement nicht zerstörungsfrei in weitere Komponenten zerlegbar ist. Insbesondere als Kunststoffbauteil lässt sich das Verbindungselement vergleichsweise einfach herstellen, beispielsweise durch ein Spritzgussverfahren.

Vorzugsweise ist es vorgesehen, dass der erste Funktionsabschnitt und/oder der zweite Funktionsabschnitt mindestens einen bügelartigen Armabschnitt, vorzugsweise genau einen bügel- bzw. henkelartigen Armabschnitt, aufweist. Insbesondere im Fall des zweiten Funktionsabschnitts ist es vorstellbar, dass lediglich ein einzelner bügelartiger Armabschnitt vorgesehen ist, da der Aufnahmebereich zusätzlich als Lager für den aufgenommenen zweiten Abschnitt der zweiten Möbelkomponente dient und so das Tragen der zweiten Möbelkomponente unterstützt. Eine Fixierung der zweiten Möbelkomponente durch die Schnappvorrichtung zur Verhinderung einer Auf- und Abbewegung der zweiten Möbelkomponente lässt sich ferner durch den zweiten Funktionsabschnitt am Verbindungselement realisieren. Insbesondere erweist es sich als vorteilhaft, weil dadurch die zweite Möbelkomponente durch die einseitige Ausbildung des bügelartigen Elements auf eine Seite im Aufnahmebereich angedrückt wird, wodurch verhindert wird, dass die zweite Möbelkomponente spielbehaftet im Aufnahmebereich angeordnet ist, was andernfalls zu einem losen Aufliegen der zweiten Möbelkomponente im Aufnahmebereich führen würde. Durch eine entsprechende Rückstellkraft in dem elastisch deformierbaren Armabschnitt des zweiten Funktionsabschnitts wird hierzu insbesondere die zweite Möbelkomponente im montierten Zustand gegen eine Innenseite des Aufnahmebereichs des Verbindungselements gedrückt. Dies erweist sich insbesondere als vorteilhaft bei den vergleichsweise leichten Regalböden Vorzugsweise ist es vorgesehen, dass der aufzunehmende Abschnitt des zweiten Möbelstücks während der Montage in den Aufnahmebereich entlang einer Steckrichtung einführbar ist, wodurch der zweite Funktionsabschnitt einerseits und der dritte Funktionsabschnitt und/oder der vierte Funktionsabschnitt andererseits in einer parallel zur Steckrichtung verlaufenden Richtung und in einer senkrecht zur Steckrichtung verlaufenden Richtung zueinander versetzt sind. Das versetzte Anordnen der unterschiedlichen Schnappvorrichtungen erweist sich insbesondere deswegen als vorteilhaft, weil das in Steckrichtung versetzte Ausbilden von Anbindungsbereichen das Verbinden der ersten Möbelkomponente, der zweiten Möbelkomponente und des Verkleidungselement gewährleistet, insbesondere derart, dass ein Abdecken des Verbindungselements mit dem Verkleidungselement möglich ist.

Vorzugsweise ist es vorgesehen, dass das Verbindungselement eine Zentrierhilfe für die zweite Möbelkomponente aufweist, wobei die Zentrierhilfe vorzugsweise im zweiten Funktionsabschnitt ausgebildet ist. Beispielsweise handelt es sich um einen kuppelförmigen oder verjüngenden Vorsprung an der Stirnseite des zweiten Funktionsabschnitts, der in eine entsprechende erste Ausnehmung in der zweiten Möbelkomponente eingreift, um während der Montage eine Ausrichtung in lateraler Richtung bzw. seitlicher Richtung der zweiten Möbelkomponente festzulegen. Insbesondere sichert im montierten Zustand der durch die erste Aussparung durchgreifende Vorsprung in Form der Zentrierhilfe zudem die zweite Möbelkomponente gegenüber einem Lateralversatz, der im Wesentlichen senkrecht verläuft zu der Steckrichtung und/oder der Hauptebene des Verbindungselements, die durch den T-förmigen Verlauf festgelegt ist.

Ein weiterer Gegenstand der vorliegenden Erfindung ist ein Stecksystem zum Aufbau eines Möbelstücks, umfassend
- eine erste Möbelkomponente,
- eine zweite Möbelkomponente,
- ein Verkleidungselement, und
- ein erfindungsgemäßes Verbindungselement, insbesondere ein von der ersten Möbelkomponente und der zweiten Möbelkomponente separates, erfindungsgemäßes Verbindungselement,
- eine erste Schnappvorrichtung, die im montierten Zustand einen Formschluss des Verbindungselements mit der ersten Möbelkomponente ausbildet,
- eine zweite Schnappvorrichtung, die im montierten Zustand einen zweiten Formschluss des Verbindungselements mit der zweiten Möbelkomponente ausbildet,
- einen Aufnahmebereich, in dem im montierten Zustand ein Abschnitt der zweiten Möbelkomponente aufgenommen ist, und
- eine dritte Schnappvorrichtung, die im montierten Zustand einen Formschluss des Verbindungselements mit einem Verkleidungselement, das den Aufnahmebereich zumindest teilweise, vorzugsweise vollständig zu einer Sichtseite des Möbelstücks, bedeckt, ausbildet, und/oder eine vierte Schnappvorrichtung, die im montierten Zustand eine Rückwand des Möbelstücks fixiert. Alle für das Verbindungselement beschriebenen Eigenschaften und Vorteile lassen sich analog übertragen auf das Stecksystem und andersrum.

Weiterhin ist es vorgesehen, dass die erste Möbelkomponente zur Ausbildung eines Leichtbauteils zwei Deckenwände aufweist, zwischen denen Hohlräume ausgebildet sind, insbesondere zwischen Querverstrebungen, die die zwei Deckwände miteinander verbinden, wobei der erste Funktionsbereich der ersten Schnappverbindung mit mindestens einer der beiden Deckwände im montierten Zustand formschlüssig zusammenwirkt. Beispielswiese handelt es sich um ein Leichtbauteil mit Querverstrebungen, die eine Wabenform ausbilden.

Ein weiterer Gegenstand der vorliegenden Erfindung ist ein Verfahren zur Montage eines Möbelstücks, wobei zum Verbinden einer ersten Möbelkomponente und einer zweiten Möbelkomponente ein erfindungsgemäßes Verbindungselement verwendet wird. Alle für das Verbindungselement beschriebenen Vorteile und Eigenschaften lassen sich analog übertragen auf das Verfahren und andersrum.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Eigenschaften der einzelnen Ausführungsform können dabei im Rahmen der Erfindung miteinander kombiniert werden.

Es zeigt:
- **Fig. 1a/b:**: ein Stecksystem gemäß einer ersten beispielhaften Ausführungsform der vorliegenden Erfindung in einer ersten Variante und in einer zweiten Variante,
- **Fig. 2:**: ein Verbindungselement gemäß einer zweiten beispielhaften Ausführungsform der vorliegenden Erfindung in einer perspektivischen Ansicht
- **Fig. 3:**: das Verbindungselement aus Figur 2 im montierten Zustand,
- **Fig. 4a, 5a, 6a, 7, 8a und 9:**: ein Verfahren zur Montage eines Möbelstücks gemäß einer beispielhaften Ausführungsform der vorliegenden Erfindung gemäß einer ersten Variante und
- **Fig. 4b, 5b, 6b, 7, 8b und 9:**: ein Verfahren zur Montage eines Möbelstücks gemäß einer beispielhaften Ausführungsform der vorliegenden Erfindung gemäß einer zweiten Variante und

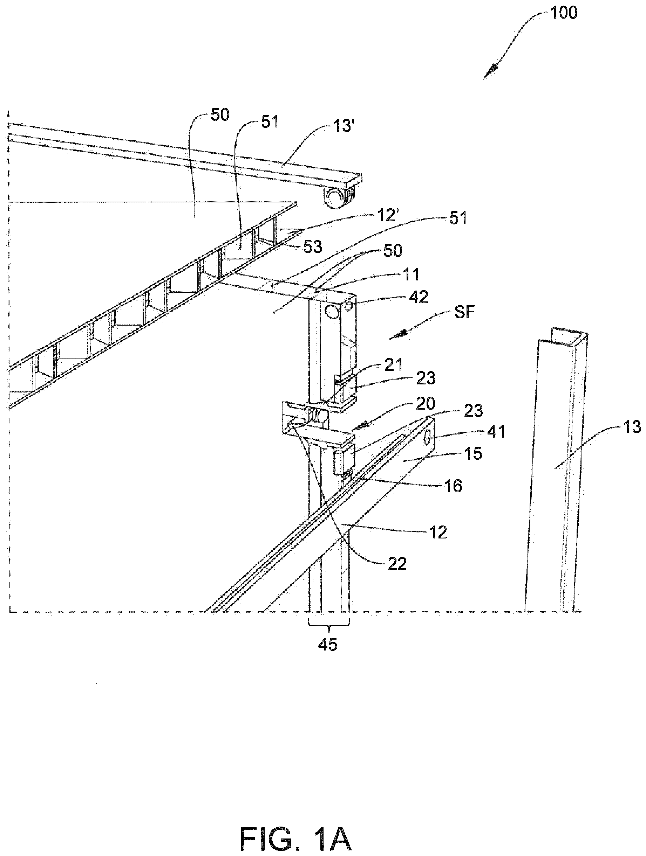

In **Figur** 1a ist ein Stecksystem 100 zum Aufbau eines Möbelstücks gemäß einer bevorzugten Ausführungsform der vorliegenden Erfindung in einer Art Explosionsdarstellung illustriert. Insbesondere handelt es sich bei dem in Figur 1a dargestellten Möbelstück um ein Regal, bei dem im montierten Zustand mittels des Stecksystems 100 eine erste Möbelkomponente 11, beispielsweise eine Seitenwand des Regals, mit einer zweiten Möbelkomponente 12, beispielsweise einem Regalbodenträger oder einem Regalboden, verbunden ist. In dem in Figur 1a dargestellten Beispiel handelt es sich bei der zweiten Möbelkomponente 12 um einen Regalbodenträger in Form einer Schiene, insbesondere einer L-förmigen Schiene bzw. einer Schiene mit einer Frontseite 15 und einer Rückseite 16. Die als Schiene ausgeformte zweite Möbelkomponente 12 wird dabei über ein Verbindungselement 10 an die erste Möbelkomponente 11, die in der Figur 1a eine Seitenwand ist, angebunden, um so eine Auflagefläche für einen Regalboden bzw. - brett 12' zu bilden.

Insbesondere handelt es sich bei dem Stecksystem 100 um ein solches Stecksystem 100, bei dem Leichtbauteile als Möbelkomponenten verwendet werden. Beispielsweise ist es vorstellbar, dass der Regalboden 12' und/oder die als Seitenwand ausgebildete erste Möbelkomponente 11 ein Leichtbauelement ist. Zur Ausbildung eines Leichtbauteils umfasst die erste Möbelkomponente 11 und/oder der Regalboden 12' zwei parallel zueinander verlaufende Deckwände 50, die durch Querverstrebung 51 voneinander getrennt sind. Die Querverstrebungen 51 sind derart angeordnet, dass sich Hohlräume zwischen den beiden Deckwänden 50 ausbilden, wodurch vergleichsweise leichte erste Möbelkomponente 11 und/oder Regalböden 12' zum Aufbau des Möbelstücks im Möbelstück verwendet werden können. Insbesondere ist es vorgesehen, dass die schienenförmige, zweite Möbelkomponente 12 eine im montierten Zustand einer Sichtseite zugewandte Frontseite 15 aufweist und eine dieser Frontseite 15 im montierten Zustand in Steckrichtung gesehen gegenüberliegende Rückseite 16, die kürzer ist als die der Sichtseite zugewandten Frontseite 15. Im montierten Zustand greift diese kürzere Rückseite 16 der schienenförmigen zweiten Möbelkomponente 12 in der dargestellten Ausführungsform in eine entsprechende Nut 53 im Regalboden 12' ein, wobei sich die Nut insbesondere an einer Unterseite des Regalbodens 12' erstreckt und vorzugsweise durch eine Unterbrechung in einer der Deckwände 50 und Aussparungen in den Querverstrebungen 51 ausgebildet ist.

Zum Fügen der ersten Möbelkomponente 11 mit der zweiten Möbelkomponente 12 ist ein Verbindungselement 10 vorgesehen, das in eine vorgesehene Aussparung 54 in der ersten Möbelkomponente 11 an dessen äußeren Umfang einschiebbar bzw. einsteckbar, vorzugsweise versenkbar, ist, vorzugsweise unter Ausbildung eines bündigen Abschlusses zur Sichtseite. Zur Vermeidung von Stoffschlussmitteln, wie Leim oder anderem Klebstoff, und weiteren Befestigungsmitteln, wie Schrauben, Bolzen oder ähnlichem, ist es vorgesehen, dass das Stecksystem 100 eine erste Schnappvorrichtung 31 und eine zweite Schnappvorrichtung 32 umfasst. Dabei dient die erste Schnappvorrichtung 31 zur Bildung eines Formschlusses zwischen der ersten Möbelkomponente 11 und dem Verbindungselement 10 und die zweite Schnappvorrichtung 32 zur Ausbildung eines Formschlusses zwischen dem Verbindungselement 10 und der zweiten Möbelkomponente 12. Zur Ausbildung der ersten Schnappvorrichtung 31 und der zweiten Schnappvorrichtung 32 sind die erste Möbelkomponente 11, die zweite Möbelkomponente 12 und das Verbindungselement 10 in den entsprechenden Bereichen mit einem passenden Verlauf an ihrer Außenseite versehen.

Das Verbindungselement 10 weist zur Ausbildung der ersten Schnappvorrichtung 31 einen ersten Funktionsabschnitt 21 und zur Ausbildung der zweiten Schnappvorrichtung 32 einen zweiten Funktionsabschnitt 22 auf. Der erste Funktionsabschnitt 21 und der zweite Funktionsabschnitt 22 sind insbesondere elastisch ausgebildet und werden zur Ausbildung des Formschlusses während der Montage für eine Rast- bzw. Schnappbewegung zur Bildung des jeweiligen Formschlusses elastisch deformiert. Unter dem Formschluss zwischen dem ersten Funktionsabschnitt 21 und der ersten Möbelkomponente 11 bzw. zwischen dem zweiten Funktionsabschnitt 22 und der zweiten Möbelkomponente 12 ist insbesondere derjenige Formschluss gemeint, der sich nach einer Einrast- bzw. Schnappbewegung bei der Montage des Stecksystems 100 einstellt.

Weiterhin ist es vorgesehen, dass das Verbindungselement 10 einen Aufnahmebereich 20 aufweist, in dem die zweite Möbelkomponente 12 während der Montage eingesteckt oder eingeschoben werden kann, um sie insbesondere im Verbindungselement 10 zu versenken. Insbesondere wird die zweite Möbelkomponente 12 im montierten Zustand im Aufnahmebereich 20 gelagert, indem sie im Aufnahmebereich 20 auf dem Verbindungselement 10 aufliegt. Zur Ausbildung des Aufnahmebereichs 20 ist das Verbindungselement 10 mit einem U-förmigen Abschnitt versehen, in den ein Abschnitt der zweiten Möbelkomponente 12 eingesetzt werden kann. Dabei ist eine Öffnung des U-förmigen Abschnitts im montierten Zustand des Verbindungselements 10 insbesondere der Sichtseite zugewandt. Dabei ist es insbesondere vorgesehen, dass eine in Steckrichtung S bemessene Länge des Aufnahmebereichs 20 größer ist als eine in dieselbe Richtung bemessene Länge des Abschnitts der zweiten Möbelkomponente 12, die vom Aufnahmebereich 20 aufgenommen wird. Dadurch wird die zweite Möbelkomponente 12, insbesondere dessen Fronseite 15, gegenüber einer der Sichtseite zugewandten Stirnseite St der ersten Möbelkomponente 11 zurückversetzt angeordnet. Insbesondere ist es vorgesehen, dass die beispielsweise als Seitenwand ausgebildete erste Möbelkomponente 11 einen Endabschnitt 45 aufweist, in dem die erste Möbelkomponente 11 vorzugsweise verjüngt bzw. verjüngt ist, indem ein Abstand zwischen den Deckwänden 50 reduziert ist. Im montierten Zustand steht der Endabschnitt 45 in einer parallel zur Steckrichtung S verlaufenden Richtung gegenüber dem in den Aufnahmebereich 20 aufgenommenen Abschnitt der zweiten Möbelkomponente 12 vor. Mit anderen Worten: der Endabschnitt 45 überragt in einer parallel zur Steckrichtung S verlaufenden Richtung den in den Aufnahmebereich 20 aufgenommenen Abschnitt der zweiten Möbelkomponente 12, insbesondere dessen Frontseite 15.

Ferner ist es vorgesehen, dass der Formschluss des Verbindungselements 10 mit der ersten Möbelkomponente 11 und der Formschluss des Verbindungselement 10 mit der zweiten Möbelkomponente 12 in eine gemeinsame Formschlussrichtung wirken, die insbesondere parallel zur Steckrichtung S verläuft, entlang der das Verbindungselement 10 in die erste Möbelkomponente 11 und/oder entlang der die zweite Möbelkomponente 12 in einen Aufnahmebereich 20 des Verbindungselements 10 bei der Montage eingeschoben wird.

Insbesondere ist es vorgesehen, dass der zweite Funktionsabschnitt 22 zur Ausbildung der zweiten Schnappvorrichtung 32 mit der insbesondere kürzeren Rückseite 16 der schienenartigen zweiten Möbelkomponente 12 zusammenwirkt, sodass zwischen der kürzeren Rückseite 16 der zweiten Möbelkomponente 12 und dem zweiten Funktionsabschnitt 22 des Verbindungselements 10 der Formschluss ausgebildet wird, mit dem die zweite Möbelkomponente 12 im montierten Zustand am Verbindungselement 10 fixiert ist. In entsprechender Weise wirkt die kürzere Rückseite 16 der zweiten Möbelkomponente 12 sowohl mit dem Verbindungselement 10, insbesondere dessen zweiten Funktionsabschnitt 22, als auch mit dem Regalboden 12', insbesondere der Nut 53 an der Unterseite des Regalbodens 12', formschlüssig zusammen.

Weiterhin ist es vorzugsweise vorgesehen, dass der Endabschnitt 45 der ersten Möbelkomponente 11 durch ein Verkleidungselement 13 ummantelt wird bzw. umschlossen wird. Hierzu ist es insbesondere vorgesehen, dass das Verkleidungselement 13 im Wesentlichen U-förmig ausgebildet ist, vorzugsweise mit gleichlangen Schenkeln, und insbesondere im montierten Zustand den Endabschnitt 45 der ersten Möbelkomponente 11, die der Sichtseite zugewandt ist, ummantelt. Dabei ist es bevorzugt vorgesehen, dass das Verkleidungselement 13 mit den offenen Enden des U-förmigen Verlaufes des Verkleidungselements 13 an die vom Aufnahmebereich 20 aufgenommene zweite Möbelkomponente 12, insbesondere an dessen Frontseite 15, angrenzt bzw. anschlägt. Auf diese Weise ist es in vorteilhafter Weise möglich, mit dem Verkleidungselement 13 und mit der zweiten Möbelkomponente 12 das Verbindungselement 10 und den Endabschnitt 45 zu verdecken, sodass es nicht mehr an der Sichtseite erkennbar ist.

Vorzugweise ist es hierzu vorgesehen, dass in dem in Figur 1a dargestellten Ausführungsbeispiel der erste Funktionsabschnitt 21 zur Ausbildung der ersten Schnappvorrichtung 31 derart ausgebildet ist, dass er im montierten Zustand im Endabschnitt 45 der ersten Möbelkomponente 11 angeordnet ist. Dadurch wird die erste Schnappvorrichtung 31 mit Vorteil von dem Verkleidungselement 13 abgedeckt bzw. verkleidet.

Ferner ist es vorgesehen, dass das Verbindungselement 10 im Wesentlichen T-förmig ausgebildet ist und der im montierten Zustand der Sichtseite zugewandte Aufnahmebereich 20 zur Aufnahme eines Abschnitts der zweiten Möbelkomponente 12 ist in den Abschnitt des T-förmigen Verlaufs integriert, der sich parallel zur Spiegelachse des T-förmigen Grundverlaufs erstreckt.

Weiterhin ist es vorgesehen, dass das Verbindungselement 10 einen dritten Funktionsabschnitt 23 zur Ausbildung einer dritten Schnappvorrichtung 33 aufweist, wobei die dritte Schnappvorrichtung 33 dazu dient, das Verkleidungselement 13 an das Verbindungselement 10 anzubinden. Dadurch kommt dem Verbindungselement 10 zusätzlich zu der Aufgabe des Fügens bzw. Verbindens von erster Möbelkomponente 11 und zweiter Möbelkomponente 12 noch die Aufgabe zu, das Verkleidungselement 13 zu fixieren, mit dem das Verbindungselement 10 im montierten Zustand verdeckt bzw. abgedeckt werden soll. Dies erweist sich insbesondere als vorteilhaft, weil dadurch lediglich ein einziges Bauteil erforderlich ist, mit der die erste Möbelkomponente 11, die zweite Möbelkomponente 12 und das Verkleidungselement 13 miteinander verbunden werden können.

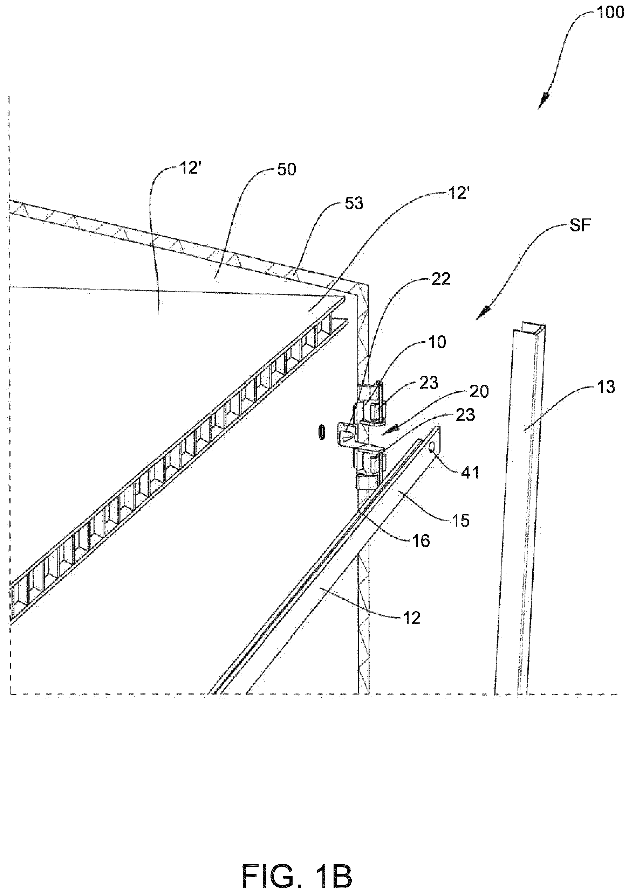

Die in Figur 1b dargestellte zweite Variante unterscheidet sich im Wesentlichen nur dahingehend von der ersten Variante, dass auf einen Endabschnitt 43 verzichtet wird. Dabei steht das Verbindungselement 10, insbesondere dessen dritter Funktionsabschnitt 23 und vierter Funktionsabschnitt 24, gegenüber der Stirnseite St der ersten Möbelkomponente 11 vor. Insbesondere liegt der quer zur Steckrichtung verlaufende Abschnitt des Verbindungselements 10 auf der Stirnseite St der ersten Möbelkomponente 11 auf. Die dritte Möbelkomponente 13 umgreift in dieser zweiten Variante einen Freibereich, der in der ersten Variante durch den verjüngten Endabschnitt 43 gebildet wird.

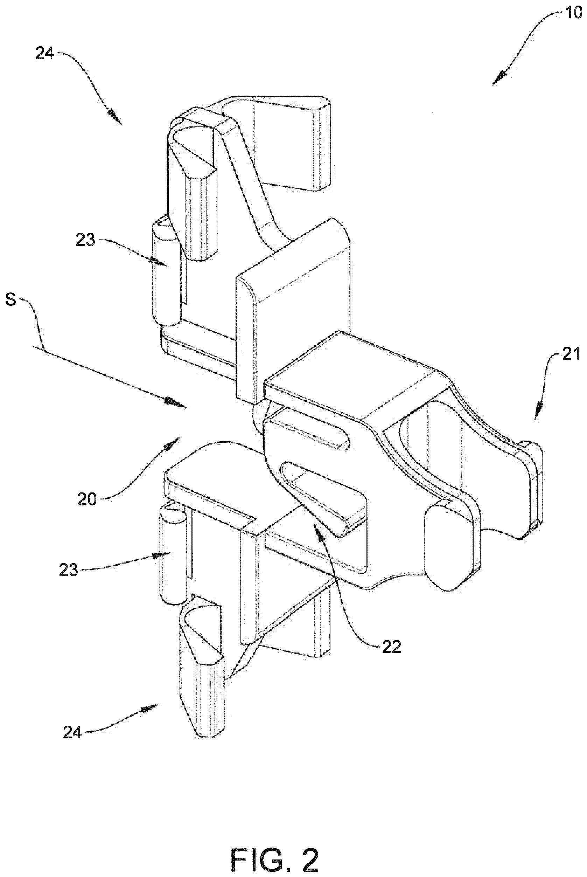

In **Figur** 2 ist ein Verbindungselement 10 gemäß einer zweiten beispielhaften Ausführungsform der vorliegenden Erfindung dargestellt. In dem in Figur 2 dargestellten Ausführungsbeispiel ist es insbesondere im Unterschied zu dem Verbindungselement 10 aus Figur 1a vorgesehen, dass der erste Funktionsabschnitt 21 nicht derart angeordnet ist, dass er im montierten Zustand im Endabschnitt 45 der ersten Möbelkomponente 11 angeordnet ist, sondern an dem der Sichtseite des Möbelstücks abgewandten Ende des Verbindungselements 10. Insbesondere sieht es der erste Funktionsabschnitt 21 in dem Ausführungsbeispiel der Figur 2 vor, dass Einrastelemente des ersten Funktionsabschnitts 21 in entsprechende Löcher oder Ausnehmungen in den Deckwänden 50 der ersten Möbelkomponente 12 eingreifen, wobei die Ausnehmungen bzw. Löcher geschlossen sind, d. h. die Ausnehmungen bzw. Löcher sind in Steckrichtung gesehen ins Innere der ersten Möbelkomponente zurückversetzt. Insbesondere ist es vorgesehen, dass der erste Funktionsabschnitt 21 im Wesentlichen federnd bzw. elastisch in eine Richtung ausgebildet ist, die senkrecht verläuft zu einer Hauptebene, die durch den T-förmigen Verlauf des Verbindungselements 10 im Wesentlichen aufgespannt wird. Im Gegensatz dazu verläuft die federnde Wirkung des ersten Funktionsabschnitts 21 aus Figur 1a in eine Richtung, die parallel zur Hauptebene des Verbindungselements 10 verläuft, die durch den T-förmigen Grundverlauf des Verbindungselements 10 festgelegt ist. Ferner ist es im Gegensatz zu der Ausführungsform in der Figur 2 vorgesehen, dass die Deckwand 50 bzw. Deckwände 50 in Figur 1a der ersten Möbelkomponente 11 am äußersten Umfang mit einem Deckwandkonturverlauf 28 versehen sind, mit dem im montierten Zustand der erste Funktionsabschnitt 21 formschlüssig mit der jeweiligen Deckwand 50 der ersten Möbelkomponente 11 zusammenwirkt.

Weiterhin ist in dem in Figur 2 dargestellten Ausführungsbeispiel ein vierter Funktionsabschnitt 24 dargestellt. Der vierte Funktionsabschnitt 24 ist insbesondere zur Ausbildung einer vierten Schnappverbindung vorgesehen, mit der eine Anbindung einer Rückwand 14 des Möbelstücks möglich ist. Insbesondere ist es vorgesehen, dass der dritte Funktionsabschnitt 23 und der vierte Funktionsabschnitt 24 gegenüber dem zweiten Funktionsabschnitt 22 entlang einer parallel zur Steckrichtung S verlaufenden Richtung und in einer senkrecht zur Steckrichtung S verlaufenden Richtung versetzt sind. Insbesondere bilden der dritte Funktionsabschnitt 23 und/oder der vierte Funktionsabschnitt 24 einen Abschluss der Seite des Verbindungselements 10, die der Sichtseite im montierten Zustand zugewandt ist.

Weiterhin ist es bevorzugt vorgesehen, dass die bügelartige Armabschnitte des ersten Funktionsabschnitts 21, des zweiten Funktionsabschnittes 22, des dritten Funktionsabschnitts 23 und/oder des vierten Funktionsabschnitts 24 sich voneinander unterscheiden. Dadurch lässt sich insbesondere dem jeweiligen Funktionszweck dienend eine entsprechende Krafteinwirkung einstellen.

Weiterhin ist es bevorzugt vorgesehen, dass der zweite Funktionsabschnitt 22 nur aus einem einzigen bügelartigen Armabschnitt gebildet ist, da der Aufnahmebereich 20 bereits als Ablage für den Abschnitt der zweiten Möbelkomponente 12 dient, die im Aufnahmebereich 20 aufgenommen ist. Der bügelartige Armabschnitt drückt die zweite Möbelkomponente 12 an die Auflageseite der zweiten Möbelkomponente 12 am Aufnahmebereich 20.

Weiterhin ist es vorgesehen, dass in einer parallel zu einer Hauptebene, die durch den T-förmigen Verlauf aufgespannt ist, und senkrecht zur Steckrichtung S verlaufenden Richtung der dritte Funktionsabschnitt 23 und vierte Funktionsabschnitt 24 übereinander angeordnet sind, insbesondere unmittelbar aneinander angrenzend übereinander angeordnet sind.

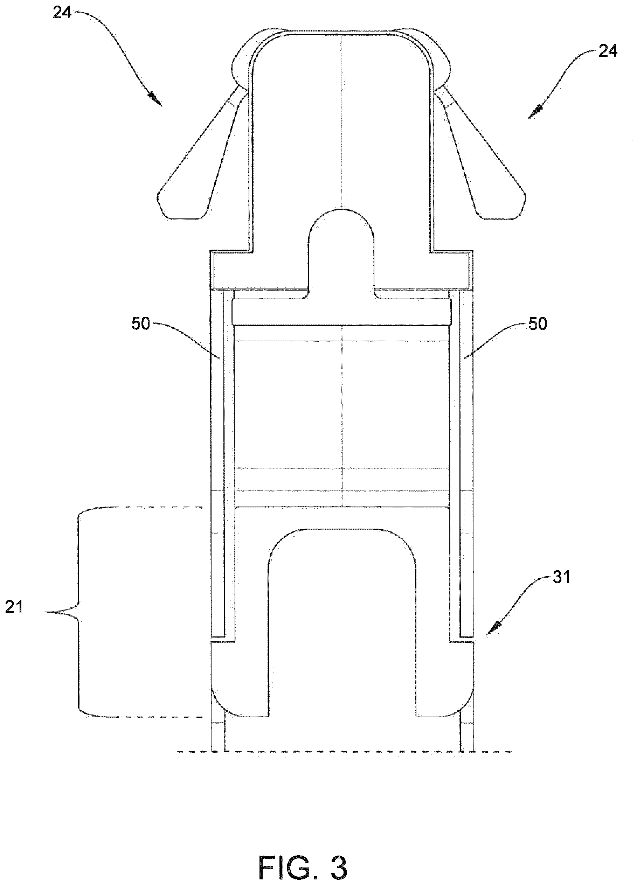

In **Figur 3** ist das Verbindungselement 10 aus Figur 2 im montierten Zustand in einer Schnittansicht dargestellt. Insbesondere ist zu erkennen, dass die hakenförmigen, insbesondere bogenförmigen Armabschnitte des ersten Funktionsabschnitts 21, in geschlossene Aussparungen in den Deckwänden 50 der ersten Möbelkomponente 11 eingreifen, um so einen Formschluss zwischen dem Verbindungselement 10 und der ersten Möbelkomponente 11 zu realisieren. Unter einer geschlossen Aussparung ist eine solche Ausnehmung zu verstehen, deren Begrenzung geschlossen ist und keine Öffnung an der Stirnseite St der ersten Möbelkomponente 11 aufweist.

Weiterhin ist es bevorzugt vorgesehen, dass die bügelartigen Arme des vierten Funktionsabschnitts 24 seitlich gegenüber dem U-förmigen Abschnitt des Verbindungselements 10 überstehen, insbesondere derart, dass sie im verbauten Zustand in einer senkrecht zur Hauptebene verlaufenden Richtung gegenüber den Deckwänden 50 der ersten Möbelkomponente 11 vorstehen. Dadurch ist es in vorteilhafter Weise möglich, mit diesen bügelartigen Armabschnitten des vierten Funktionsabschnitts 24 die Rückwand 14 mit den Enden des vierten Funktionsabschnitts 24 bzw. den bügelartigen Armabschnitten zu fixieren. Dabei umgreifen die bügelarmigen Armabschnitte des vierten Funktionsabschnitts 24 die Rückwand 14 und fixieren sie am Möbelstück.

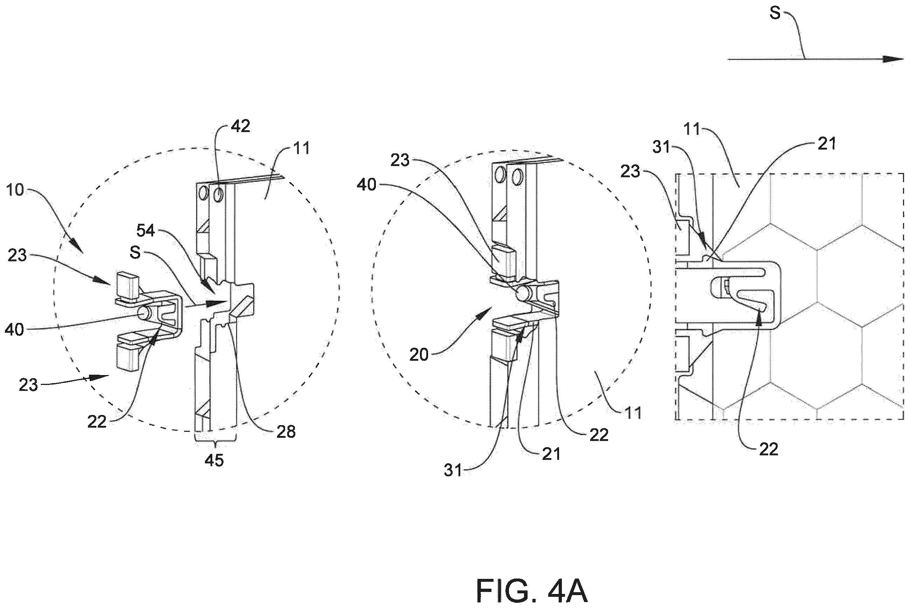

In den **Figuren 4a bis 9** ist ein Verfahren zum Aufbau bzw. zur Montage eines Möbelstücks mit einem Stecksystem 100 gemäß einer beispielhaften Ausführungsform der vorliegenden Erfindung dargestellt, insbesondere für die erste Variante aus Figur 1a. Insbesondere ist es hierbei vorgesehen, dass in einem ersten Schritt (links in Figur 4a) entlang einer Steckrichtung S das Verbindungselement 10 in die erste Möbelkomponente 11 eingeschoben bzw. eingesetzt wird. Hierzu ist in den Deckwänden 50 ein entsprechender Deckwandkonturverlauf 28 vorgesehen, der insbesondere derart profiliert ist, dass er komplementär ausgebildet ist zur Außenkontur des Verbindungselements 10, insbesondere in dessen U-förmigen Abschnitt. Dabei wirkt der Deckwandkonturverlauf 28 zumindest abschnittsweise formschlüssig mit dem ersten Funktionsabschnitt 21 zusammen, der in dem dargestellten Ausführungsbeispiel im Endabschnitt 45 der ersten Möbelkomponente 11 angeordnet ist, die insbesondere der Sichtseite des Möbelstücks in montiertem Zustand zugewandt ist. Weiterhin ist es vorgesehen, dass im zweiten Funktionsabschnitt 22 des Verbindungselements 10 eine Zentrierhilfe 40 ausgeformt ist, insbesondere in Form einer halbkugelförmigen oder kuppelförmigen Erhebung an der Stirnseite des zweien Funktionsabschnitts 22, der im Aufnahmebereich 20 angeordnet ist. Weiterhin ist es vorgesehen, dass der Deckwandkonturverlauf 28 so ausgeformt ist, dass der dritte Funktionsabschnitt 23 des Verbindungselements 10 versenkt werden kann in der ersten Möbelkomponente 11 und insbesondere bündig abschließt mit der Stirnseite St der ersten Möbelkomponente 11, die der Sichtseite des Möbelstücks zugewandt ist. Insbesondere ist es vorgesehen, dass im Verbindungselement 10 der Figur 4a auf einen vierten Funktionsabschnitt 24 verzichtet wird.

Weiter ist es vorgesehen, dass der zweite Funktionsabschnitt 22 innerhalb des Aufnahmebereichs 20 angeordnet ist, insbesondere zurückversetzt gegenüber der Stirnseite St der ersten Möbelkomponente 11, die der Sichtseite des Möbelstücks zugewandt ist. Die Illustrationen in der Mitte und rechts in Figur 4a zeigen das Verbindungselement 10 im montierten Zustand in einer perspektivischen Ansicht (mittig) und in einer Schnittansicht (rechts), wobei in der rechten Darstellung die wabenförmige Struktur der Querstreben 51 der als Leichtbauteil ausgebildeten ersten Möbelkomponente 11 dargestellt ist. Insbesondere ist es vorgesehen, dass das Verbindungselement 10 mit der ersten Möbelkomponente 11 im montierten Zustand formschlüssig entlang einer parallel zur Steckrichtung S verlaufenden Richtung zusammenwirkt.

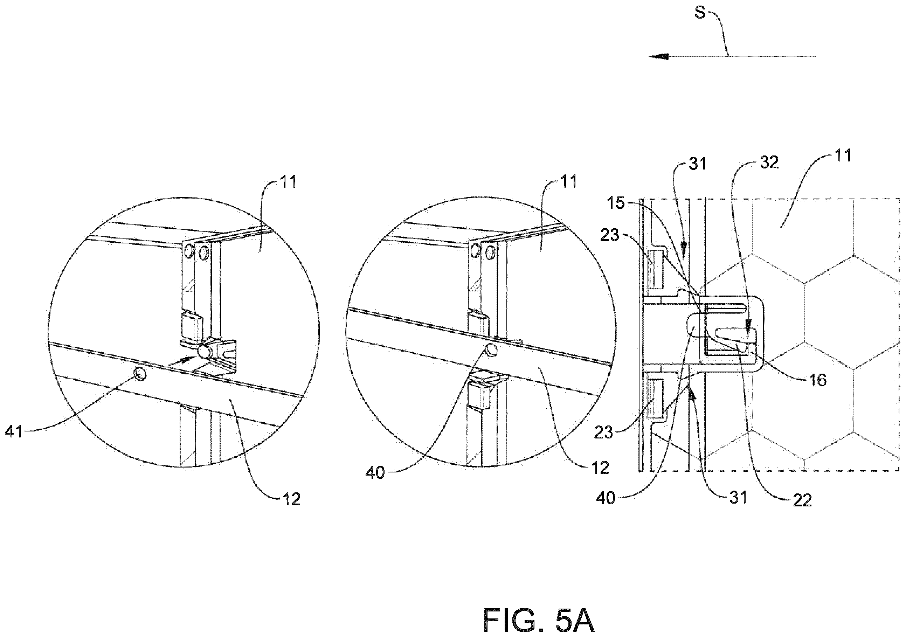

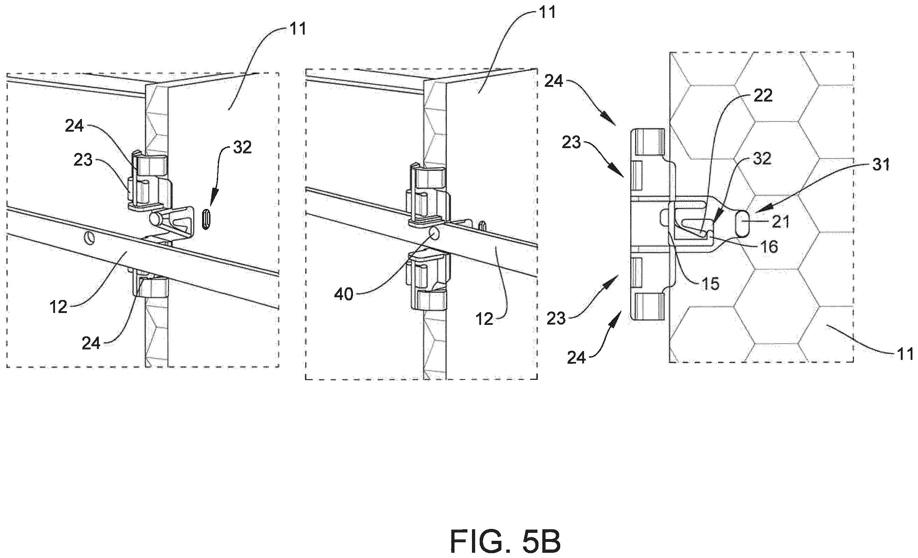

In **Figur 5a** ist dargestellt, wie die zweite Möbelkomponente 12 mit dem Verbindungselement 10 gefügt bzw. zusammengesetzt wird. Hierzu wird die zweite Möbelkomponente 12, insbesondere ein Abschnitt der zweiten Möbelkomponente 12 entlang der Steckrichtung S in den Aufnahmebereich 20 eingeschoben bzw. eingesetzt. Während des Einsetzens wirkt dabei die Zentrierhilfe 40 mit einer entsprechenden ersten Ausnehmung 41 derart zusammen, dass die zweite Möbelkomponente 12, insbesondere die schienenartige zweite Möbelkomponente 12, gegenüber einem seitlichem Verschieben fixiert wird und die Montage vereinfacht wird. Während einer Steckbewegung deformiert der zweite Funktionsabschnitt 22 des Verbindungselements 10, der insbesondere innenseitig am Boden des U-förmigen Ausnehmungsbereich ausgebildet ist, und rastet mit seinem bügelartigen Armabschnitt hinter der Rückseite 16 des Abschnitts der zweiten Möbelkomponente 12 ein, der in den Aufnahmebereich 20 eingeführt wurde. Der bügelartige Armabschnitt und die Rückseite 16 der zweiten Möbelkomponente 12 wirken dann entlang einer parallel zur Steckrichtung S verlaufenden Richtung formschlüssig zusammen.

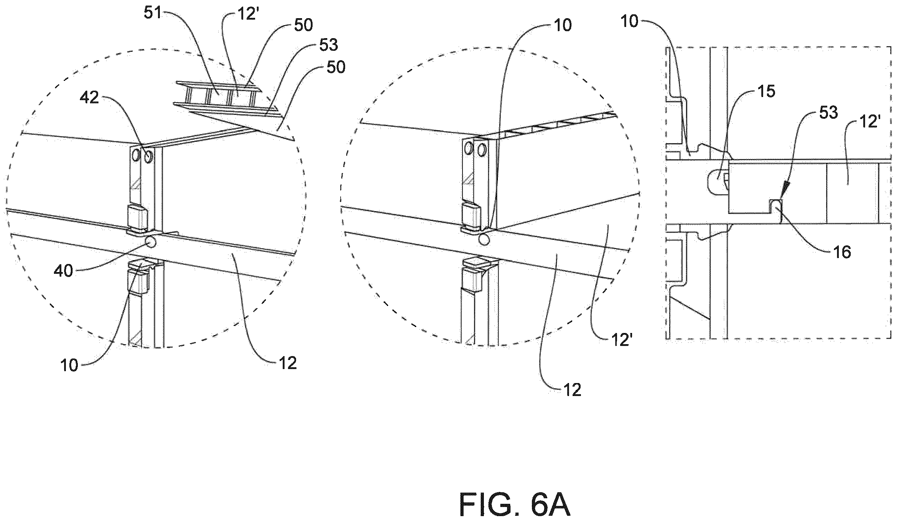

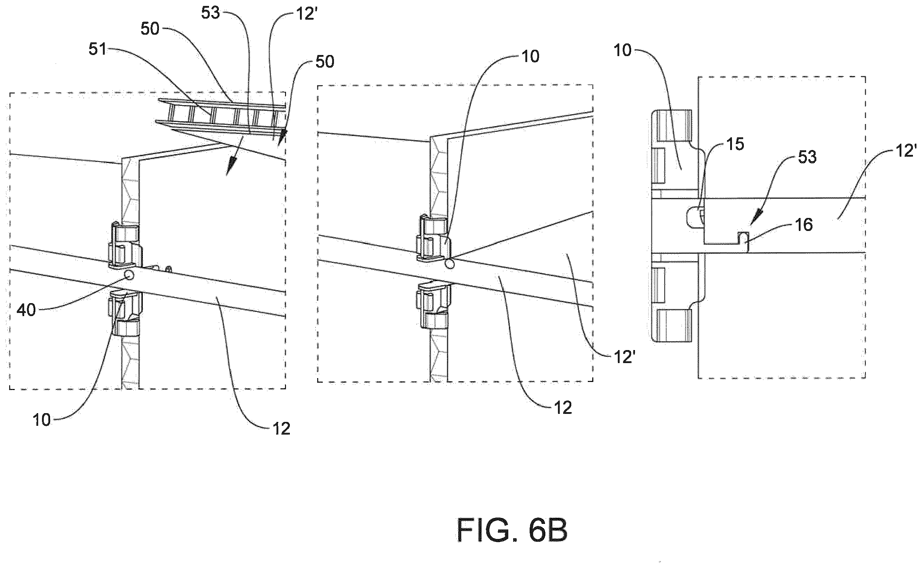

In den Verfahrensschritten der **Figur 6a** wird ein Regalboden 12', insbesondere ausgestaltet als Leichtbauteil, auf die schienenartige zweite Möbelkomponente 12 aufgelegt. Dabei wirkt der Regalboden 12' insbesondere mit seiner Unterseite bzw. einer in die Unterseite eingelassenen Nut 52 formschlüssig zusammen mit der Rückseite 16 der zweiten Metallkomponente 12. Dadurch wird der Regalboden 12' gegenüber Verschiebungen parallel zur Steckrichtung S fixiert.

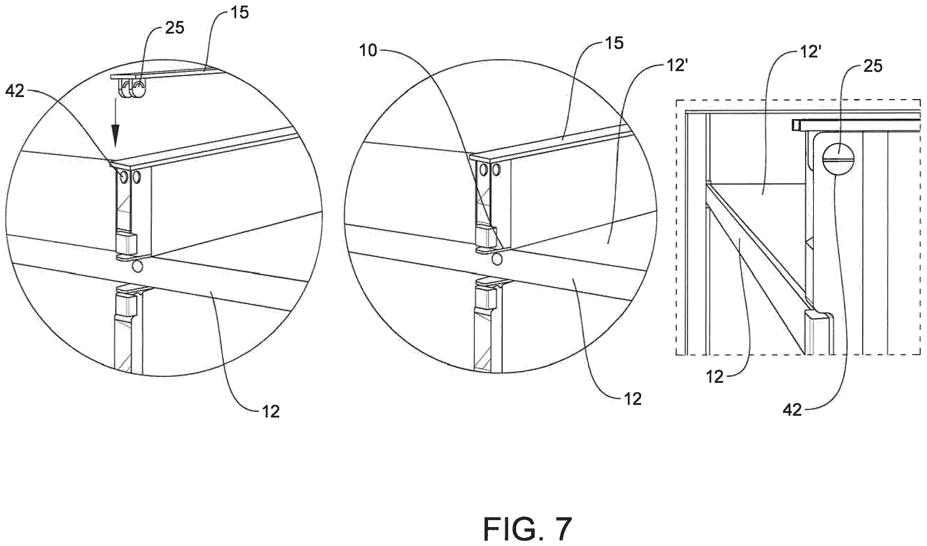

In **Figur 7** ist ein weiteres Verkleidungselement 13' dargestellt, dass über eine fünfte Schnappvorrichtung mit dem Endabschnitt der ersten Möbelkomponente 11 formschlüssig verbunden wird. Insbesondere ist es dabei vorgesehen, dass das weitere Verkleidungselement 13' eine Oberseite der ersten Möbelkomponente 11 abdeckt bzw. verschließt. Dabei sind das Verkleidungselement 13 und das weitere Verkleidungselement 13' separate Bauteile, wobei insbesondere das Verkleidungselement 13 zur Abdeckung des Endabschnitts 45 an der Sichtseite des Möbelstücks vorgesehen ist, während das weitere Verkleidungselement 13' zur Abdeckung der Oberseite der ersten Möbelkomponente 11 dient.

Zum Zusammenwirken eines entsprechenden fünften Funktionsabschnitt 25 am weiteren Verkleidungselement 13' ist im Endabschnitt 45, insbesondere am oberen Ende des Endabschnitts 45, in der ersten Möbelkomponente 11 eine zweite Aussparung 42 eingelassen, in die der entsprechende fünfte Funktionsabschnitt 25 der fünften Schnappvorrichtung eingreift, um so mit dem Endabschnitt 45 formschlüssig zusammenzuwirken.

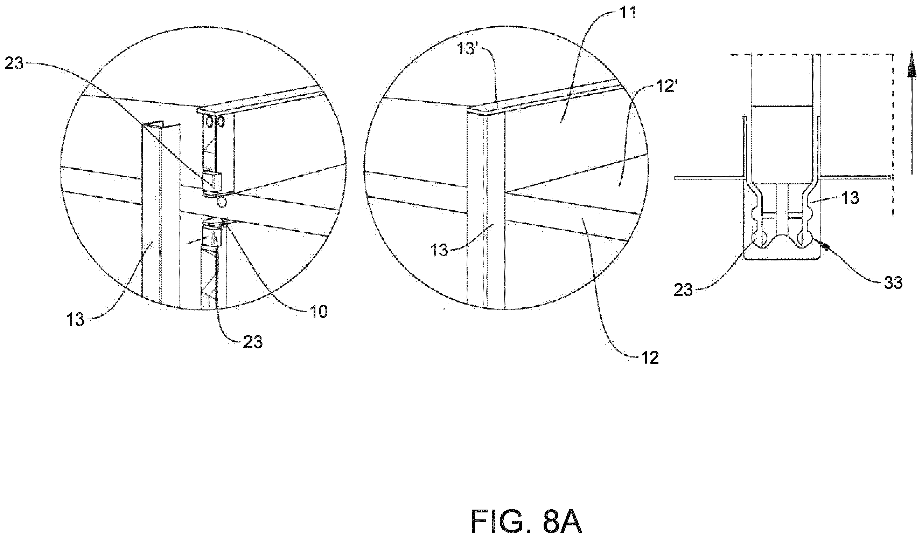

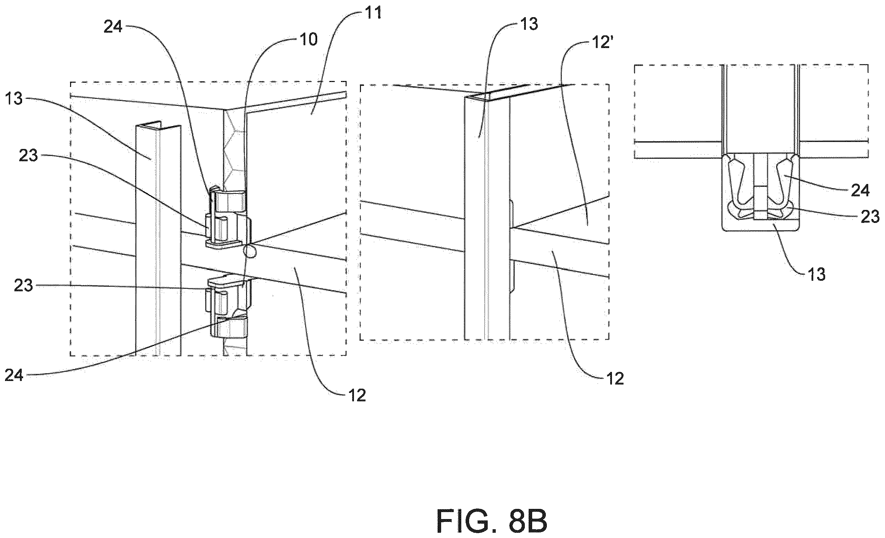

In **Figur 8a** ist das Anbinden des Verkleidungselements 13 an das Verbindungselement 10 dargestellt. Dabei ist es vorzugsweise vorgesehen, dass die Anbindung des Verbindungselements 13 nach dem Anbindung des weiteren Verkleidungselements 13' erfolgt, um somit auch den fünften Funktionsabschnitt 25 bzw. den Endabschnitt mit der zweiten Ausnehmung 42 durch das Verkleidungselement 13 abzudecken. Das im Wesentlichen U-förmig ausgebildete Verkleidungselement 13 wird entlang der Steckrichtung S auf das Verbindungselement 10 aufgesteckt und wirkt mit einem entsprechenden Konturverlauf an der Innenseite des U-förmig ausgebildeten Verkleidungselements 13' in einer parallel zur Stapelrichtung S verlaufenden Richtung formschlüssig zusammen mit dem dritten Funktionsabschnitts 23 des Verbindungselements 10. Dadurch wird in vorteilhafter Weise das Verkleidungselement 13 am Möbelstück montiert. Um ein Verschieben des Verkleidungselements 10 in der Höhe zu verhindern, d. h. um eine Auf- und Abbewegung des Verkleidungselements 13 zu verhindern, ist es vorzugsweise vorgesehen, dass das weitere Verkleidungselement 13', das Verkleidungselement 13 übergreift und formschlüssig an der Oberseite der ersten Möbelkomponente 11 mit dem Verkleidungselement 13 zusammenwirkt.

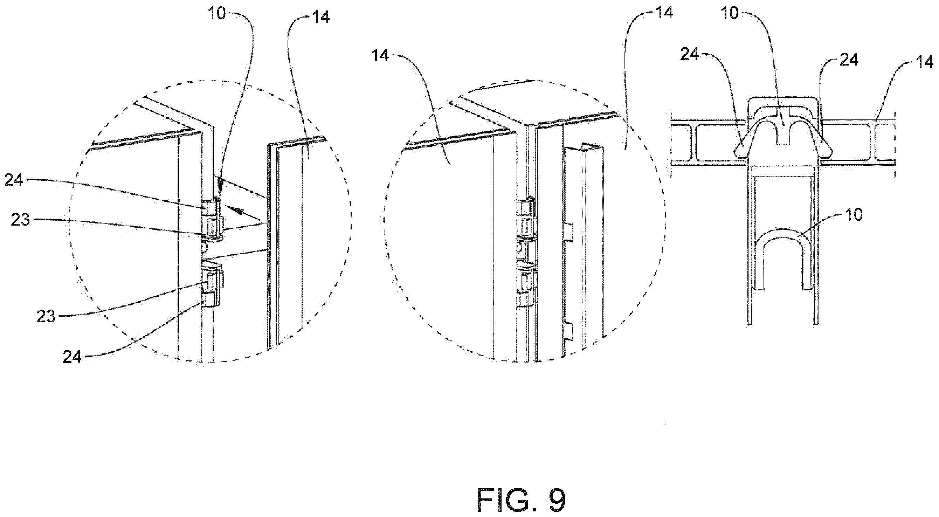

In **Figur 9** ist beispielhaft die Montage der Rückwand 14 dargestellt, insbesondere unter Verwendung eines vierten Funktionsabschnitts 24 am Verbindungselement 10. Während die linke und mittige Abbildung in Figur 9 jeweils die Anbindung der Rückwand 14 an das Verbindungselement 10 in einer perspektivischen Ansicht zeigen, ist in der rechten Abbildung der Figur 9 eine Schnittansicht dargestellt. Die Schnittansicht lässt erkennen, dass die bügelartigen Armabschnitte des vierten Funktionsabschnitts 24 in Hohlbereiche in der Rückwand 14, die ebenfalls als Leichtbauteil ausgebildet ist, eingreifen. Insbesondere wirken die Enden der bügelartigen Armabschnitte des vierten Funktionsabschnitts 24 formschlüssig in Richtung der Steckrichtung S mit der Deckwand 50 zusammen, die der Sichtseite abgewandt ist. Vorzugsweise sind die bügelartigen Armabschnitte derart dimensioniert, dass sie sich im Wesentlichen entlang einer parallel zur Steckrichtung S verlaufenden Richtung über eine Distanz erstrecken, die im Wesentlichen den Abstand der Deckwände 50 entspricht, sodass die als Leichtbauteil ausgebildete Rückwand 14 die bügelartigen Armabschnitte verdeckt und nicht zu erkennen gibt. Dadurch wird der optische Eindruck auf der Rückwand 14 in vorteilhafter Weise optimiert.

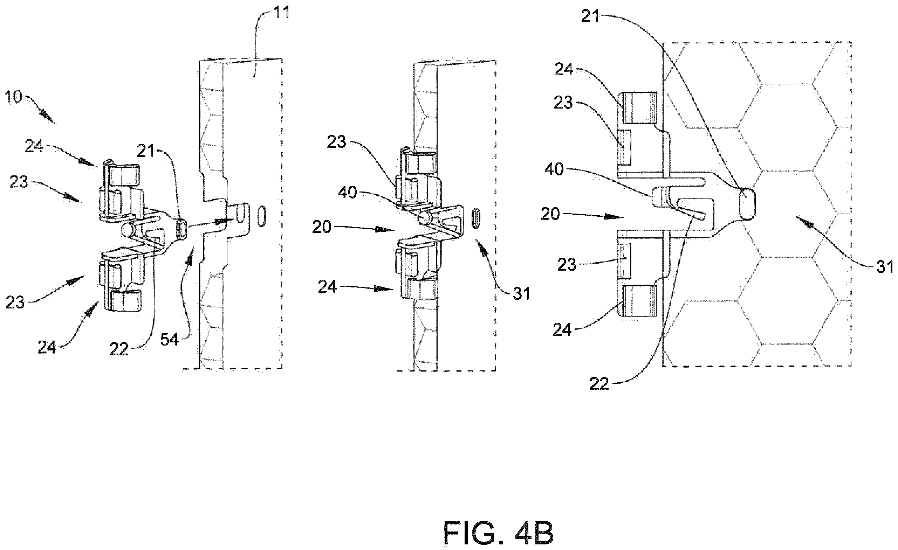

Die Figuren **4b****,** **5b****,** **6b****,** **7****,** **8b** **und** **9** zeigen das Verfahren zur Montage eines Möbelstücks für die zweite Variante, die in Figur 1b dargestellt. Insbesondere unterscheidet sich das hier dargestellte Verfahren von dem für die erste Variante, dahingehend, dass der vierte Funktionsabschnitt 24 zusätzlich zur Fixierung der dritten Möbelkomponente 13 vorgesehen ist. Dabei wirkt der vierte Funktionsabschnitt 24 zusätzlich zum dritten Funktionsabschnitt 23 mit der Innenseite der dritten Möbelkomponente 13 zusammen. Vorzugsweise ist es vorgesehen, dass im verbauten Zustand eine Deformation des vierten Funktionsabschnitts 24 größer ist als die Deformation des dritten Funktionsabschnitts 23. Dadurch kann der vierte Funktionsabschnitt 24 durch eine entsprechenden Klemm bzw. Spreizkraft die Fixierung der dritten Möbelkomponente 13 am Verbindungselement 10 mit Vorteil unterstützen. Außerdem kann der gleiche Typ Verbindungselement 10 für Frontseite und Rückseite des Möbelstücks verwendet werden.

### Bezugszeichen:

- 10: Verbindungselement
- 11: erste Möbelkomponente
- 12: zweite Möbelkomponente
- 12`: Regalboden
- 13: Verkleidungselement
- 13': weiteres Verkleidungselement
- 14: Rückwand
- 15: Frontseite
- 16: Rückseite
- 20: Aufnahmebereich
- 21: erste Funktionsabschnitt
- 22: zweiter Funktionsabschnitt
- 23: dritter Funktionsabschnitt
- 24: vierter Funktionsabschnitt
- 25: fünfter Funktionsabschnitt
- 28: Deckwandkonturverlauf
- 31: erste Schnappvorrichtung
- 32: zweite Schnappvorrichtung
- 33: dritte Schnappvorrichtung
- 34: vierte Schnappvorrichtung
- 40: Zentrierhilfe
- 41: erste Ausnehmung
- 42: zweite Ausnehmung
- 45: Endabschnitt
- 50: Deckwand
- 51: Querverstrebung
- 53: Nut
- 54: Aussparung
- 100: Stecksystem
- S: Steckrichtung
- St: Stirnseite der ersten Möbelkomponente

## Patentansprüche

1. Verbindungselement (10) für ein Möbelstück zum Verbinden einer ersten Möbelkomponente (11), beispielsweise einer Seitenwand, mit einer schräg zur ersten Möbelkomponente (11) verlaufenden zweiten Möbelkomponente (12), beispielweise einem Regalbodenträger oder einem Regalboden, ohne zusätzliches Stoffschlussmittel und ohne zusätzliches Befestigungsmittel, umfassend:
- einen ersten Funktionsabschnitt (21) für eine erste Schnappvorrichtung (31), die im montierten Zustand einen ersten Formschluss des Verbindungselements (10) mit der ersten Möbelkomponente (11) ausbildet,
- einen zweiten Funktionsabschnitt (22) für eine zweite Schnappvorrichtung (32), die im montierten Zustand einen zweiten Formschluss (32) des Verbindungselements (10) mit der zweiten Möbelkomponente (12) ausbildet,
- einen Aufnahmebereich (20), in dem im montierten Zustand ein Abschnitt der zweiten Möbelkomponente (11) aufgenommen ist, und
- einen dritten Funktionsabschnitt (23) für eine dritte Schnappvorrichtung (33), die im montierten Zustand einen dritten Formschluss des Verbindungselements (10) mit einem Verkleidungselement (13) ausbildet, das den Aufnahmebereich zumindest teilweise, vorzugsweise vollständig zu einer Sichtseite des Möbelstücks, bedeckt, und/oder einen vierten Funktionsabschnitt (24) für eine vierte Schnappvorrichtung (34), die im montierten Zustand eine Rückwand (14) des Möbelstücks fixiert,
wobei das Verbindungselement (10) integral ausgebildet ist und insbesondere aus Kunststoff gefertigt ist.

2. Verbindungselement (10) gemäß Anspruch 1, wobei der zweite Funktionsabschnitt (22) im Aufnahmebereich (20) angeordnet ist.

3. Verbindungselement (1) gemäß einem der vorhergehenden Ansprüche, wobei das Verbindungselement (10) im Wesentlichen T-förmig ist.

4. Verbindungselement (10) gemäß einem der vorhergehenden Ansprüche, wobei der erste Funktionsabschnitt (21) und/oder der zweite Funktionsabschnitt (22) mindestens einen bügelartigen Armabschnitt, vorzugsweise genau einen bügelartigen Armabschnitt, aufweist.

5. Verbindungselement (10) gemäß einem der vorhergehenden Ansprüche, wobei der aufzunehmenden Abschnitt des zweiten Möbelstücks während der Montage in den Aufnahmebereich (20) entlang einer Steckrichtung (S) einführbar ist, wobei der zweite Funktionsabschnitt (22) einerseits und der dritte Funktionsabschnitt (23) und/oder der vierte Funktionsabschnitt (24) andererseits in einer parallel zur Steckrichtung (S) verlaufenden Richtung und in einer senkrecht zur Steckrichtung (S) verlaufenden Richtung zueinander versetzt sind.

6. Verbindungselement (10) gemäß einem der vorhergehenden Ansprüche, wobei das Verbindungselement (10) eine Zentrierhilfe (40) für die zweite Möbelkomponente (12) aufweist, wobei die Zentrierhilfe (40) vorzugsweise im zweiten Funktionsabschnitt (22) ausgebildet ist.

7. Stecksystem (100) zum Aufbau eines Möbelstücks umfassend
- eine erste Möbelkomponente (11),
- eine zweite Möbelkomponente (12),
- ein Verkleidungselement (13), und
- ein Verbindungselement (10) gemäß einem der vorhergehenden Ansprüche, insbesondere ein von der ersten Möbelkomponente (11) und der zweiten Möbelkomponente (12) separates Verbindungselement (10) gemäß einem der vorhergehenden Ansprüche,
- eine erste Schnappvorrichtung (31), die im montierten Zustand einen Formschluss des Verbindungselements (10) mit der ersten Möbelkomponente (11) ausbildet,
- eine zweite Schnappvorrichtung (32), die im montierten Zustand einen zweiten Formschluss des Verbindungselements (10) mit der zweiten Möbelkomponente (12) ausbildet,
- einen Aufnahmebereich (20), in dem im montierten Zustand ein Abschnitt der zweiten Möbelkomponente (12) aufgenommen ist, und
- eine dritte Schnappvorrichtung (33), die im montierten Zustand einen Formschluss des Verbindungselements (10) mit einem Verkleidungselement (13) ausbildet, das den Aufnahmebereich (20) zumindest teilweise, vorzugsweise vollständig zu einer Sichtseite des Möbelstücks, bedeckt, und/oder eine vierte Schnappvorrichtung, die im montierten Zustand eine Rückwand (14) des Möbelstücks fixiert.

8. Stecksystem (100) gemäß Anspruch 7, wobei die erste Möbelkomponente (11) zur Ausbildung eines Leichtbauteils zwei Deckwände (51) aufweist, zwischen denen Hohlräume ausgebildet sind, insbesondere zwischen Querverstrebungen (51), die die zwei Deckwände (50) miteinander verbinden, wobei der erste Funktionsbereich (21) der ersten Schnappverbindung (31) mit mindestens einer der beiden Deckwände (50) im montierten Zustand formschlüssig zusammenwirkt.

9. Verfahren zur Montage eines Möbelstücks, wobei zum Verbinden einer ersten Möbelkomponente (11) und einer zweiten Möbelkomponente (12) ein Verbindungselement (10) gemäß der Ansprüche 1 bis 6 verwendet wird.

## Claims

1. Connecting element (10) for a piece of furniture for connecting a first furniture component (11), for example a side wall, to a second furniture component (12) extending at an angle to the first furniture component (11), for example a shelf support or a shelf, without additional material fastening means and without additional fastening means, comprising
- a first functional section (21) for a first latching device (31) which, in the assembled state, forms a first form fit of the connecting element (10) with the first furniture component (11),
- a second functional section (22) for a second latching device (32) which, in the assembled state, forms a second form fit (32) of the connecting element (10) with the second furniture component (12),
- a receiving region (20), in which a section of the second furniture component (11) is received in the assembled state, and
- a third functional section (23) for a third latching device (33) which, in the assembled state, forms a third form fit of the connecting element (10) with a cladding element (13) which covers the receiving region at least partially, preferably completely on a visible side of the piece of furniture, and/or a fourth functional section (24) for a fourth latching device (34) which, in the assembled state, fixes a back wall (14) of the piece of furniture,
wherein the connecting element (10) is integrally formed and, in particular, is made of plastic.

2. Connecting element (10) according to claim 1, wherein the second functional section (22) is arranged in the receiving region (20).

3. Connecting element (1) according to any one of the preceding claims, wherein the connecting element (10) is substantially T-shaped.

4. Connecting element (10) according to one of the preceding claims, wherein the first functional section (21) and/or the second functional section (22) comprises at least one bracket-like portion of an arm, preferably exactly one bracket-like portion of an arm.

5. Connecting element (10) according to one of the preceding claims, wherein the section of the second piece of furniture to be received can be inserted into the receiving region (20) along an inserting direction (S) during the assembly, wherein the second functional section (22) on the one hand and the third functional section (23) and/or the fourth functional section (24) on the other hand are offset relative to one another in a direction running parallel to the inserting direction (S) and in a direction running perpendicular to the inserting direction (S).

6. Connecting element (10) according to one of the preceding claims, wherein the connecting element (10) comprises a centering aid (40) for the second furniture component (12), wherein the centering aid (40) is preferably formed in the second functional section (22).

7. Push-fit system (100) for assembling a piece of furniture comprising
- a first furniture component (11),
- a second furniture component (12)
- a cladding element (13), and
- a connecting element (10) according to one of the preceding claims, in particular a connecting element (10) separate from the first furniture component (11) and the second furniture component (12) according to one of the preceding claims,
- a first latching device (31) which, in the assembled state, forms a form fit of the connecting element (10) with the first furniture component (11),
- a second latching device (32) which, in the assembled state, forms a second form fit of the connecting element (10) with the second furniture component (12),
- a receiving region (20), in which a section of the second furniture component (12) is received in the assembled state, and
- a third latching device (33) which, in the assembled state, forms a form fit of the connecting element (10) with a cladding element (13) which covers the receiving region (20) at least partially, preferably completely on a visible side of the piece of furniture, and/or a fourth latching device which, in the assembled state, fixes a back wall (14) of the piece of furniture.

8. Push-fit system (100) according to claim 7, wherein the first furniture component (11) has two cover walls (51) for forming a lightweight component, between which cavities are formed, in particular between cross-bracing (51), which connect the two cover walls (50) to one another, wherein the first functional region (21) of the first latch connection (31) interacts positively with at least one of the two cover walls (50) in the assembled state.

9. A method for assembling a piece of furniture, wherein a connecting element (10) according to claims 1 to 6 is used for connecting a first furniture component (11) and a second furniture component (12).

## Revendications

1. Elément de liaison (10) pour un meuble, destiné à relier un premier composant de meuble (11), par exemple une paroi latérale, à un deuxième composant de meuble (12), par exemple un support d'étagère ou une étagère, s'étendant en biais par rapport au premier composant de meuble (11), sans autre moyen de coopération de matières et sans autre moyen de fixation, comprenant :
- une première portion fonctionnelle (21) pour un premier dispositif d'encliquetage (31) qui, à l'état monté, établit une première liaison par coopération de formes de l'élément de liaison (10) avec le premier composant de meuble (11),
- une deuxième portion fonctionnelle (22) pour un deuxième dispositif d'encliquetage (32) qui, à l'état monté, établit une deuxième liaison par coopération de formes (32) de l'élément de liaison (10) avec le deuxième composant de meuble (12),
- une zone de réception (20) dans laquelle est reçue, à l'état monté, une portion du deuxième composant de meuble (11), et
- une troisième portion fonctionnelle (23) pour un troisième dispositif d'encliquetage (33) qui, à l'état monté, établit une troisième liaison par coopération de formes de l'élément de liaison (10) avec un élément d'habillage (13) qui recouvre au moins partiellement, de préférence complètement, la zone de réception vers un côté visible du meuble, et/ou une quatrième portion fonctionnelle (24) pour un quatrième dispositif d'encliquetage (34) qui, à l'état monté, fixe une paroi arrière (14) du meuble,
dans lequel
l'élément de liaison (10) est réalisé intégralement et est fabriqué en particulier en matière plastique.

2. Elément de liaison (10) selon la revendication 1,
dans lequel la deuxième portion fonctionnelle (22) est disposée dans la zone de réception (20).

3. Elément de liaison (1) selon l'une des revendications précédentes,
dans lequel l'élément de liaison (10) est sensiblement en forme de T.

4. Elément de liaison (10) selon l'une des revendications précédentes,
dans lequel la première portion fonctionnelle (21) et/ou la deuxième portion fonctionnelle (22) présente(nt) au moins une portion de bras en forme d'étrier, de préférence exactement une portion de bras en forme d'étrier.

5. Elément de liaison (10) selon l'une des revendications précédentes,
dans lequel, pendant le montage, la portion à recevoir du deuxième meuble peut être introduite dans la zone de réception (20) le long d'une direction d'enfichage (S),
la deuxième portion fonctionnelle (22), d'une part, et la troisième portion fonctionnelle (23) et/ou la quatrième portion fonctionnelle (24), d'autre part, étant décalées l'une par rapport à l'autre dans une direction parallèle à la direction d'enfichage (S) et dans une direction perpendiculaire à la direction d'enfichage (S).

6. Elément de liaison (10) selon l'une des revendications précédentes,
dans lequel l'élément de liaison (10) présente un organe d'aide au centrage (40) pour le deuxième composant de meuble (12), l'organe d'aide au centrage (40) étant de préférence réalisé dans la deuxième portion fonctionnelle (22).

7. Système d'enfichage (100) pour monter un meuble, comprenant
- un premier composant de meuble (11),
- un deuxième composant de meuble (12),
- un élément d'habillage (13), et
- un élément de liaison (10) selon l'une des revendications précédentes, en particulier un élément de liaison (10) selon l'une des revendications précédentes, séparé du premier composant de meuble (11) et du deuxième composant de meuble (12),
- un premier dispositif d'encliquetage (31) qui, à l'état monté, établit une liaison par coopération de formes de l'élément de liaison (10) avec le premier composant de meuble (11),
- un deuxième dispositif d'encliquetage (32) qui, à l'état monté, établit une deuxième liaison par coopération de formes de l'élément de liaison (10) avec le deuxième composant de meuble (12),
- une zone de réception (20) dans laquelle est reçue, à l'état monté, une portion du deuxième composant de meuble (12), et
- un troisième dispositif d'encliquetage (33) qui, à l'état monté, établit une liaison par coopération de formes de l'élément de liaison (10) avec un élément d'habillage (13) qui recouvre la zone de réception (20) au moins partiellement, de préférence complètement, vers un côté visible du meuble, et/ou un quatrième dispositif d'encliquetage qui, à l'état monté, fixe une paroi arrière (14) du meuble.

8. Système d'enfichage (100) selon la revendication 7,
dans lequel, pour former un élément de construction léger, le premier composant de meuble (11) présente deux parois de recouvrement (51) entre lesquelles sont formés des espaces creux, en particulier entre des entretoises transversales (51) qui relient les deux parois de recouvrement (50) l'une à l'autre, la première zone fonctionnelle (21) du premier dispositif d'encliquetage (31) coopérant par coopération de formes avec au moins l'une des deux parois de recouvrement (50), à l'état monté.

9. Procédé de montage d'un meuble, dans lequel on utilise un élément de liaison (10) selon les revendications 1 à 6 pour relier un premier composant de meuble (11) et un deuxième composant de meuble (12).
